# EUROPEAN PATENT APPLICATION

(11) **EP 1 890 233 A1**
(43) Date of publication of application: **20.02.2008**
(21) Application number: 06256514.8
(22) Date of filing: 21.12.2006
(51) Int. Cl.: G06F 9/50

(54) **Load balancing apparatus**

(30) Priority: 04.08.2006 JP 2006213901
(71) Applicant: Fujitsu Ltd., Kawasaki-shi, Kanagawa 211-8588 (JP)
(72) Inventor: Takagi, Junji, Kawasaki-shi Kanagawa 211-8588 (JP)
(74) Representative: Stebbing, Timothy Charles

(57) **Abstract**

A load balancing apparatus (20) distributes a biometric authentication request output from a client device (10) to one of a plurality of authenticating devices (1, 2, 3).
The load balancing apparatus (20) includes a storage unit (22) that stores therein information on load evaluation indicative of load arising from particular processing in the biometric authentication; and a destination deciding unit (23c) that decides a destination of the biometric authentication request based on the information on load evaluation present in the storage unit (22), a performance property of each authenticating device and a load thereon that changes depending on a processing situation.

## Description

The present invention generally relates to a load balancing apparatus that distributes a request from a client device to a computer server. The present invention particularly relates to a load balancing apparatus that balances a load on each authenticating device that performs biometric authentication.

Japanese Patent Application Laid-open No. 2001-222292 discloses a load balancing method for computer servers in a client-server communication system.

One disclosed approach is, for example, a round robin method according to which loads on servers are balanced by distributing processing requests in rotation to a plurality of servers prepared with the same configuration. Another disclosed approach is a method of balancing loads on servers by using information such as a minimum connection quantity or a minimum response time.

A client-server type of a biometric authentication system has a problem that the system cannot efficiently balance loads on servers arising from particular processing for biometric authentication. When performing authentication by one-to-n matching by inputting only biometric information (for example, information of fingerprint or vein) to identify an individual person, a server that performs biometric authentication searches all data registered thereon to narrow down targets. Consequently, the larger the quantity of data to be searched, the more resources are used in the server, such as a central processing unit (CPU) and a memory, thereby causing the larger load on the server. On the other hand, when performing authentication by one-to-one matching by using a user identification (ID) code and biometric information to identify an individual person, the server narrows down targets by using the user ID code as a key. Consequently, the server needs less resource consumption of the CPU and the memory, thereby causing a relatively less load on the server. Thus, the biometric authentication system has a problem that the system cannot efficiently balance loads on servers, unless every request for biometric authentication is efficiently distributed to an appropriate server in accordance with particular processing for biometric authentication, such as authentication by one-to-one matching or authentication by one-to-one matching.

According to an aspect of the present invention, a load balancing apparatus that distributes a processing request output from a client device to one of processing devices that perform processing of said request in accordance with performance property of each processing device and a load thereon that changes depending on a processing situation, includes a storage unit that stores therein information on load evaluation indicative of load arising from particular processing of said request; and a destination deciding unit that decides a destination of the request based on the information on load evaluation present in the storage unit, the performance property, and the load.

According to another aspect of the present invention, a method of balancing load by distributing a processing request output from a client device to one of authenticating devices that perform processing of said request in accordance with performance property of each processing device and a load thereon that changes depending on a processing situation, includes storing information on load evaluation indicative of load arising from particular processing of said request in a storage unit; and deciding a destination of the request based on the information on load evaluation present in the storage unit, the performance property, and the load.

In preferred embodiments of the above aspects of the invention, the processing is biometric authentication or identification.

The above and other features, advantages and technical and industrial significance of this invention will be better understood by reading the following detailed description of presently preferred embodiments of the invention, when considered in connection with the accompanying drawings.

In the drawings:
Fig. 1 is a schematic for explaining a load balancing apparatus according to a first embodiment of the present invention;
Fig. 2 is a block diagram of the load balancing apparatus explained in Fig. 1;
Fig. 3 is a table for explaining information about an application program for a client device according to the first embodiment;
Fig. 4 is a table for explaining user data in authenticating devices according to the first embodiment;
Fig. 5 is a table for explaining information of performance properties of the authenticating devices according to the first embodiment;
Fig. 6 is a table for explaining information of loads on the authenticating devices according to the first embodiment;
Fig. 7 is a table for explaining system data of the authenticating devices according to the first embodiment;
Fig. 8 is a table for explaining information about application programs for the authenticating devices according to the first embodiment;
Fig. 9 is an example of a matching-level-threshold weight table according to the first embodiment;
Fig. 10 is a flowchart of a destination deciding process according to the first embodiment;
Fig. 11 is an example of a matching-data quality weight table according to a second embodiment of the present invention;
Fig. 12 is a schematic for explaining a destination deciding process according to the second embodiment;
Fig. 13 is an example of a matching-data size weight table according to a third embodiment of the present invention;
Fig. 14 is a schematic for explaining a destination deciding process according to the third embodiment;
Fig. 15 is an example of a matching-algorithm weight table according to a fourth embodiment of the present invention;
Fig. 16 is a schematic for explaining a destination deciding process according to the fourth embodiment;
Fig. 17 is an example of an authenticating-mode weight table according to a fifth embodiment of the present invention;
Fig. 18 is a schematic for explaining a destination deciding process according to the fifth embodiment;
Fig. 19 is an example of a biometric-information weight table according to a sixth embodiment of the present invention;
Fig. 20 is a schematic for explaining a destination deciding process according to the sixth embodiment;
Fig. 21 is an example of a matching-level-threshold weight table according to a seventh embodiment of the present invention;
Fig. 22 is an example of a matching-level-threshold converting table according to the seventh embodiment;
Fig. 23 is a flowchart of creation of the matching-level-threshold converting table shown in Fig. 22;
Fig. 24 is an example of a registration biometric-data quality-threshold weight table according to an eighth embodiment of the present invention;
Fig. 25 is a schematic for explaining a destination deciding process according to the eighth embodiment;
Fig. 26 is an example of a registration biometric-data quality weight table according to a ninth embodiment of the present invention; and
Fig. 27 is a schematic for explaining a destination deciding process according to the ninth embodiment.

Exemplary embodiments of the present invention will be explained below in detail with reference to accompanying drawings.

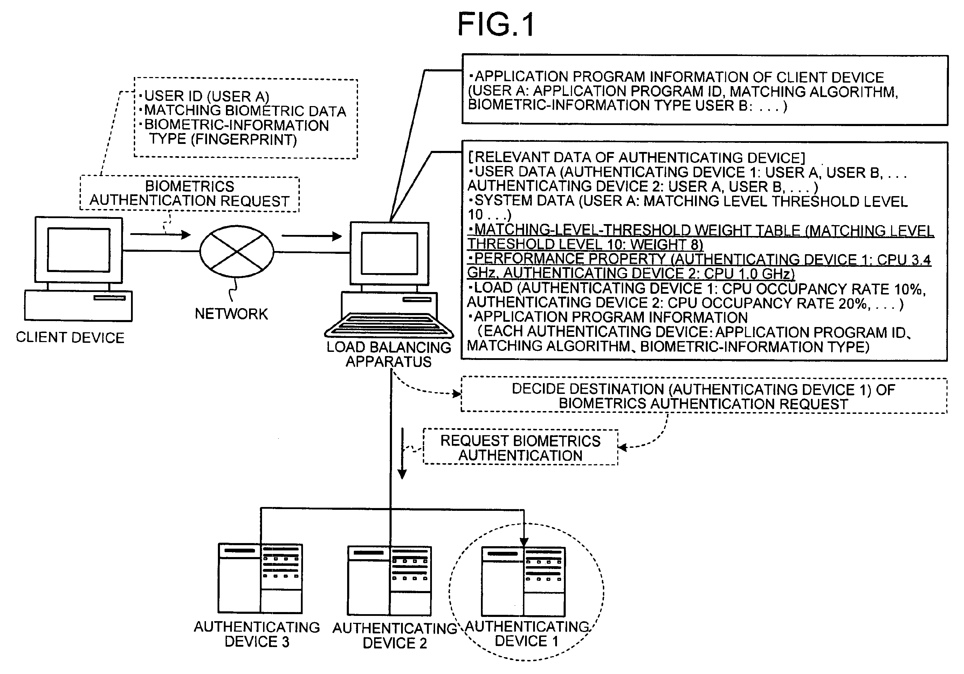

Fig. 1 is a schematic for explaining a load balancing apparatus according to a first embodiment of the present invention.

When receiving a biometric authentication request from a client device connected via a network, a load balancing apparatus according to a first embodiment of the present invention distributes the request to one of authenticating devices that perform biometric authentication. The load balancing apparatus distributes the request in accordance with a performance property (e.g. processing capacity) of each of the authenticating devices and a load on each of the authenticating devices that changes as processing is carried out, so as to efficiently balance loads on servers arising from particular processing for (e.g. particular operations, or degree of complexity, involved in) biometric authentication.

When receiving the biometric authentication request from the client device via a network (communication network formed by public lines, the Internet, or an intranet) together with user identification information including a user identification (ID) code (for example, USER A), matching biometric data, and a biometric-information type (for example, fingerprint); the load balancing apparatus executes processing of deciding a destination of the request (for example, one of an authenticating device 1, an authenticating device 2, and an authenticating device 3 that are arranged under command of the load balancing apparatus).

Specifically, the load balancing apparatus stores therein information about application programs for a client device in advance. The information about an application program for a client device includes an application program ID, a matching algorithm (for example, feature extraction or pattern matching), and a biometric-information type, all of which are stored by associating with respective user ID codes (for example, USER A and USER B).

In addition, the load balancing apparatus stores therein relevant data of an authentication device including user data, system data, a matching-level threshold weight table, a performance property, a load on the authentication device, and information about application programs in advance. The user data includes user ID codes of users for whom an authenticating device can perform authentication. The user data is stored in the load balancing apparatus by associating each user ID code with at least one authenticating device.

The system data includes a matching level threshold that is set for each application program type installed on an authenticating device. The matching level threshold is a threshold for determining pass or failure of an authentication based on a degree of matching as a result of matching between a matching biometric data received from a client device and registration biometric data pre-stored in an authenticating device. For example, when the matching level threshold is expressed in ten levels, namely, level 1 to level 10, level 10 is a level that requires the most precise degree of matching between the matching biometric data and the registration biometric data. The system data is stored in the load balancing apparatus by associating with each authenticating device.

The matching-level-threshold weight table provides information for load evaluation based on which the load balancing apparatus evaluates a load to be borne by an authenticating device when the authenticating device performs biometric authentication. For example, ten levels of weight, namely level 1 to level 10, are set correspondingly to the matching level threshold recorded in the system data present in the authenticating device (as the higher matching level has the heavier weight) so that the heavier weight indicates the heavier load borne by the authenticating device when performing biometric authentication.

The performance property includes a clock frequency (for example, 3.4 GHz, or 1.0 GHz) of a CPU in the authenticating device. The performance property is stored in the load balancing apparatus by associating each authenticating device. Information of the load on an authenticating device includes a CPU occupancy rate (for example, 10%, or 20%). The information of the load is stored in the load balancing apparatus by associating each authenticating device. The application program information includes an application program ID, a matching algorithm, and a biometric-information type. The application program information is stored in the load balancing apparatus by associating each authenticating device.

The load balancing apparatus then narrows down authenticating devices to at least one candidate of the destination of the biometric authentication request. In other words, the load balancing apparatus narrows down the authenticating devices to at least one authenticating device that is judged capable to process the biometric authentication request from the user A, based on the application program information for the client device, and the user data and the application program information recorded in the relevant data of the authenticating devices, with respect to the user ID code, USER A. In addition, a developer of the load balancing apparatus can predetermine at least one authenticating device as desired to which the load balancing apparatus can distribute a biometric authentication request, correspondingly to each weight in the matching-level-threshold weight table. For example, when the request has weight 8 or more, the load balancing apparatus distributes the request to the authenticating device 1 or 2.

As a result, the load balancing apparatus ranks narrowed-down destination candidates of authenticating devices (for example, ranked in ten levels in which level 10 has the highest priority) based on the matching-level-threshold weight table, the performance properties, and the loads on the authenticating devices; and then designates an authenticating device with the highest priority as a destination.

For example, suppose the load balancing apparatus narrows down destination candidates to the authenticating device 1 and the authenticating device 2. When the load balancing apparatus ranks the narrowed-down destination candidates based on the matching-level-threshold weight table, the performance properties, and the loads on the authenticating devices; suppose the clock frequency of the CPU of the authenticating device 1 is 3.4 GHz, the clock frequency of the CPU of the authenticating device 2 is 1.0 GHz, the CPU occupancy rate of the authenticating device 1 is 10%, and the CPU occupancy rate of the authenticating device 2 is 20%. If an evaluation of a request is weight 8 as defined in the matching-level-threshold weight table (in which 10 is maximum), the authentication processing is evaluated as a relatively heavy processing. Consequently, because of such relatively heavy load predicted to be borne by a responsible authenticating device, the load balancing apparatus gives destination priority 10 to the authenticating device 1, which has the highest performance property and the lightest current load in the narrowed-down destination candidates, while the load balancing apparatus gives destination priority 9 to the authenticating device 2. The load balancing apparatus then designates the authenticating device 1 with the highest priority as the destination of the biometric authentication request.

The load balancing apparatus then requests the authenticating device 1 to perform biometric authentication in response to the biometric authentication request received from the client device.

Thus, the load balancing apparatus according to the first embodiment holds a load evaluation that is a load evaluated to be required for biometric authentication. The load evaluation is set correspondingly to a matching level threshold based on which pass or failure of biometric authentication is determined. For example, the load evaluation is numerical information indicated as weight that is a load predicted to be required for biometric authentication on an authenticating device. The load balancing apparatus then decides a destination of the biometric authentication request by referring to the load evaluation, performance property of each authenticating device and a load thereon. Therefore, the load balancing apparatus can distribute a biometric authentication request to a server (authenticating device) to efficiently balance a load on the server arising from the processing particular to biometric authentication.

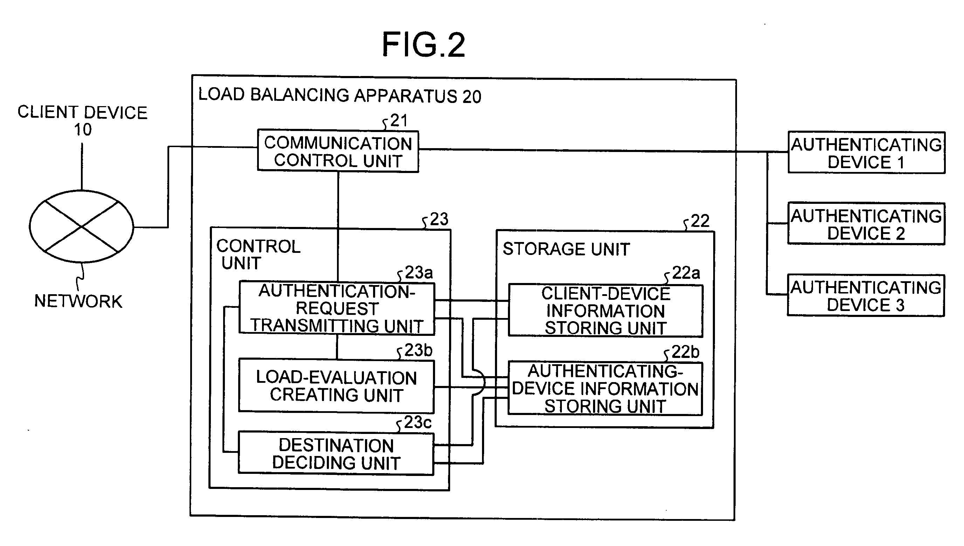

Fig. 2 is a block diagram of a load balancing apparatus 20 according to the first embodiment.

The load balancing apparatus 20 is connected to a client device 10 via a network formed by public lines, the Internet, or an intra-net. The load balancing apparatus 20 includes a communication control unit 21, a storage unit 22, and a control unit 23.

The communication control unit 21 controls communication of information transmitted between relevant devices, such as between the client device 10 and the authenticating device 1. Specifically, the communication control unit 21 controls receiving of the biometric authentication request transmitted together with the user identification information (i.e., information including a user ID code, matching biometric data, and a biometric-information type) from the client device 10. In addition, the communication control unit 21 controls sending of a biometric authentication request to an authenticating device (for example, the authenticating device 1) from an authentication-request transmitting unit 23a.

The storage unit 22 stores therein data and computer programs necessary for relevant processing performed by the control unit 23. The storage unit 22 includes a client-device information storing unit 22a and an authenticating-device information storing unit 22b.

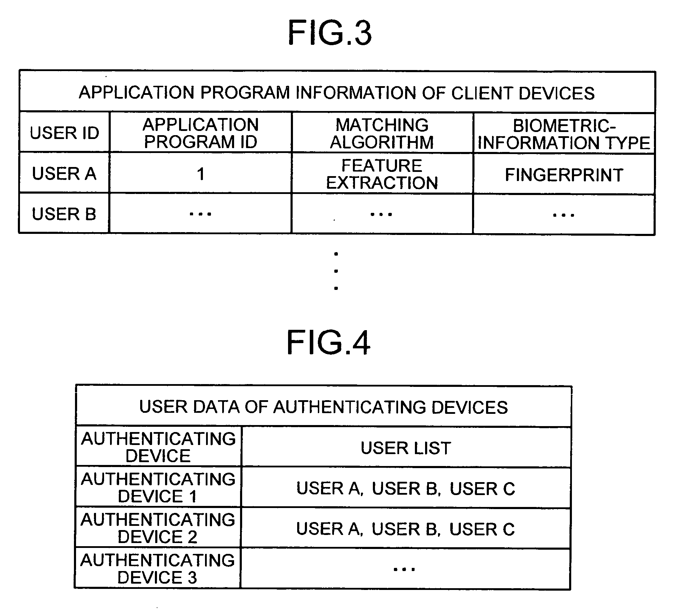

The client-device information storing unit 22a stores therein relevant information of the client device that issues a biometric authentication request. Specifically, as shown in Fig. 3, the client-device information storing unit 22a stores therein a user ID code, an application program ID, a matching algorithm (for example, feature extraction, or pattern matching), and a biometric-information type (for example, fingerprint, or vein) by associating each user ID code (for example, USER A or USER B) with the relevant information.

The authenticating-device information storing unit 22b stores therein relevant information of each authenticating device that performs biometric authentication. Relevant data of each authentication device (the authenticating device 1, the authenticating device 2, and the authenticating device 3) includes user data of the authenticating device, performance property of the authenticating device, a load on the authenticating device, system data of the authenticating device, application program information of the authenticating device, and the matching-level-threshold weight table.

As shown in Fig. 4, the user data of each authenticating device includes user ID codes associated with the authenticating device that performs biometric authentication for users of the user ID codes.

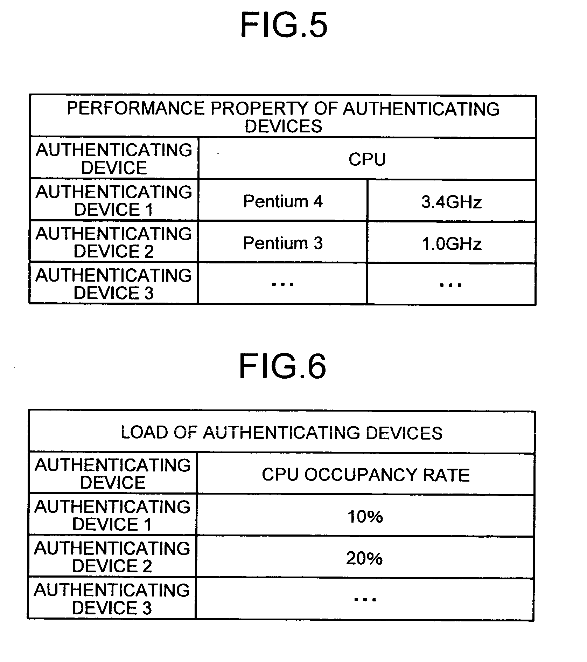

As shown in Fig. 5, the performance property of each authenticating device includes potential performance of a CPU (for example, 3.4 GHz or 1.0 GHz) associated with the authenticating device.

As shown in Fig. 6, the information of a load on each authenticating device includes a CPU occupancy rate (for example, 10%, or 20%) associated with the authenticating device. The information of the load is renewed as per operating situation.

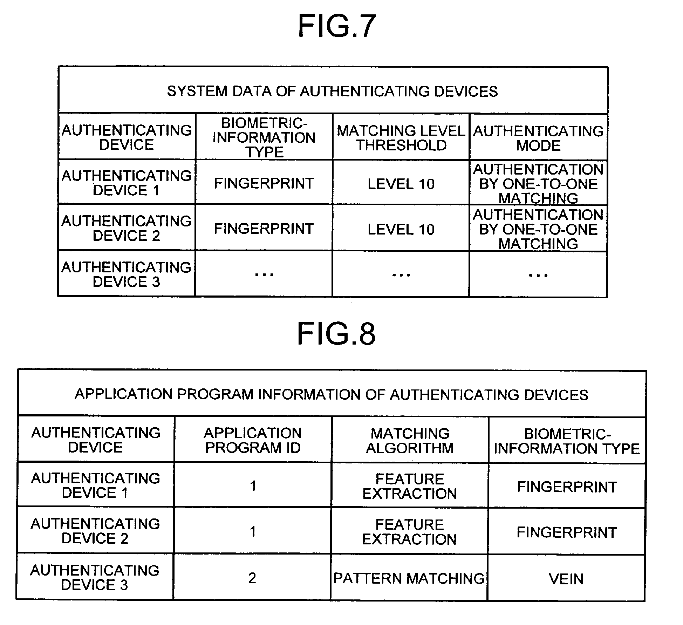

As shown in Fig. 7, the system data of each authenticating device includes a biometric information type, a matching level threshold, and an authenticating mode. The matching level threshold is a threshold for determining pass or failure of an authentication based on a degree of matching as a result of matching between matching biometric data (i.e. data to be matched) received from a client device and registration biometric data (i.e. registered data) pre-stored in the authenticating device; and is set in accordance with a type of application program installed on the authenticating device. For example, when the matching level threshold is expressed in ten levels, namely, level 1 to level 10, level 10 is a level that requests the most precise degree of matching between the matching biometric data and the registration biometric data). The authenticating mode indicates a method of biometric authentication by one-to-one matching or one-to-n matching. Authentication by one-to-one matching is performed by identifying an individual person based on a user ID code and biometric information (matching biometric data) both of which are input by the individual person. Authentication by one-to-n matching is performed by identifying an individual person based on only biometric information input by the individual person.

In the first embodiment, the matching level threshold is stored in the system data. However, the present invention is not limited to this, but also the matching level threshold can be stored in the user data per user of the client device 10.

As shown in Fig. 8, the application program information of each authenticating device includes an application program ID installed on each authenticating device, a matching algorithm and a biometric-information type corresponding to the application program, all of which are associated with each authenticating device.

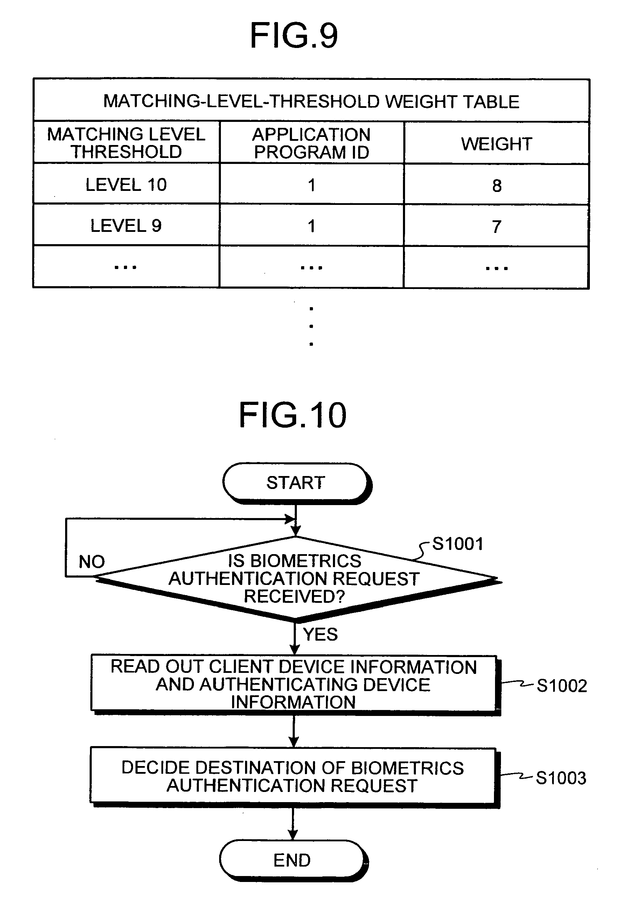

As shown in Fig. 9, the matching-level-threshold weight table includes a matching level threshold, an application program ID, and a weight, all of which are associated each other. In this case, the weight means information for load evaluation based on which the load balancing apparatus 20 evaluates a load borne by an authenticating device when the authenticating device performs biometric authentication. For example, ten levels of weight, namely level 1 to level 10, are set correspondingly to the matching level threshold such that the higher matching level has the heavier weight. The heavier weight indicates the heavier load borne by the authenticating device when performing biometric authentication.

Relevant information present in the client-device information storing unit 22a and the authenticating-device information storing unit 22b are acquired when starting authentication or at regular intervals from the client device 10 and each of the authenticating devices 1 to 3) respectively.

The control unit 23 includes an internal memory that stores therein computer programs including a computer program for controlling relevant units and a computer program for defining a processing procedure and data required for the computer programs. The control unit 23 performs relevant processing based on these computer programs and data. The control unit 23 includes the authentication-request transmitting unit 23a, a load-evaluation creating unit 23b, and a destination deciding unit 23c.

The authentication-request transmitting unit 23a controls receiving of an authentication request or sending of the authentication request. Specifically, the authentication-request transmitting unit 23a receives a biometric authentication request together with user identification information sent from the client device 10 via the communication control unit 21. When receiving a destination of a biometric authentication request from the destination deciding unit 23c, the authentication-request transmitting unit 23a transmits the biometric authentication request together with the user identification information acquired from the client device 10 and kept in the internal memory to an authenticating device of the destination via the communication control unit 21.

The load-evaluation creating unit 23b creates information for load evaluation based on which the load balancing apparatus 20 evaluates a load borne by an authenticating device when the authenticating device performs biometric authentication. The load-evaluation creating unit 23b creates the load evaluation by setting a weight from 1 to 10 correspondingly to a matching level threshold acquired from each authenticating device (of the authenticating devices 1 to 3) when starting authentication or at regular intervals.

The destination deciding unit 23c decides a destination of a biometric authentication request. The destination can be any one from among the authenticating devices 1 to 3. Specifically, when receiving a biometric authentication request together with user identification information from the client device 10, the destination deciding unit 23c reads out relevant information from the client-device information storing unit 22a and the authenticating-device information storing unit 22b.In accordance with a user ID code (for example, USER A) included in the user identification information received from the client device 10, the destination deciding unit 23c then narrows down candidates for the destination of the biometric authentication request based on the application program information of the client device 10 and the user data and the application program information of each authenticating device. In other words, the destination deciding unit 23c narrows down to at least one authenticating device that is determined to be capable to process the biometric authentication request from the user A. The destination deciding unit 23c then searches a matching level threshold from system data of narrowed-down authenticating device(s). In addition, a developer of the load balancing apparatus 20 can predetermine at least one authenticating device as desired to which the load balancing apparatus can distribute a biometric authentication request, correspondingly to each weight in the matching-level-threshold weight table. For example, when a request has weight 8 or more, the load balancing apparatus distributes the request to the authenticating device 1 or 2.

As a result, the load balancing apparatus 20 ranks narrowed-down destination candidates of authenticating devices (for example, ranked in ten levels in which level 10 has the highest priority) based on the matching-level-threshold weight table, the performance properties, and the loads on the authenticating devices; and then designates an authenticating device with the highest priority as a destination.

For example, suppose the load balancing apparatus 20 narrows down destination candidates to the authenticating device 1 and the authenticating device 2. When the load balancing apparatus 20 ranks the narrowed-down destination candidates based on the matching-level-threshold weight table, the performance properties, and the loads on the authenticating devices; suppose the clock frequency of the CPU of the authenticating device 1 is 3.4 GHz, the clock frequency of the CPU of the authenticating device 2 is 1.0 GHz, the CPU occupancy rate of the authenticating device 1 is 10%, and the CPU occupancy rate of the authenticating device 2 is 20%. If an evaluation of a request is weight 8 as defined in the matching-level-threshold weight table (in which 10 is maximum), the authentication processing is evaluated as a relatively heavy processing. Consequently, because of such relatively heavy load predicted to be borne by a responsible authenticating device, the load balancing apparatus 20 gives destination priority 10 to the authenticating device 1, which has the highest performance property and the lightest current load in the narrowed-down destination candidates, while the load balancing apparatus 20 gives destination priority 9 to the authenticating device 2. The load balancing apparatus 20 then designates the authenticating device 1 with the highest priority as the destination of the biometric authentication request, and transmits an instruction of the destination to the authentication-request transmitting unit 23a.

The client device 10 can be realized by providing a biometric information acquiring device, such as a fingerprint sensor or a vein sensor, on a terminal device, for example, a personal computer or a work station.

The load balancing apparatus 20 can be achieved by installing each function of the storage unit 22 and the control unit 23 on a known personal computer or a known work station.

Fig. 10 is a flowchart of a destination deciding process according to the first embodiment.

When receiving a biometric authentication request together with user identification information from the client device 10 (Yes at step S1001), the destination deciding unit 23c reads out relevant information from the client-device information storing unit 22a and the authenticating-device information storing unit 22b (step S1002).

The destination deciding unit 23c then decides the destination (for example, one of the authenticating devices 1 to 3) of the biometric authentication request (step S1003). Specifically, the destination deciding unit 23c narrows down candidates for the destination of the biometric authentication request based on the application program information of the client device 10, and the user data and the application program information of the authenticating devices, with respect to the user ID code received from the client device 10 (for example, USER A).

As a result, the destination deciding unit 23c ranks narrowed-down destination candidates in order of priority (for example, based on ten levels in which level 10 has the highest priority), based on the matching-level-threshold weight table, and the performance property of and the load on each authenticating device. The destination deciding unit 23c then designates an authenticating device with the highest priority as the destination. For example, suppose the load balancing apparatus 20 narrows down destination candidates to the authenticating device 1 and the authenticating device 2. When the load balancing apparatus 20 ranks the narrowed-down destination candidates based on the matching-level-threshold weight table, the performance properties, and the loads on the authenticating devices; suppose the clock frequency of the CPU of the authenticating device 1 is 3.4 GHz, the clock frequency of the CPU of the authenticating device 2 is 1.0 GHz, the CPU occupancy rate of the authenticating device 1 is 10%, and the CPU occupancy rate of the authenticating device 2 is 20%. If an evaluation of a request is weight 8 as defined in the matching-level-threshold weight table (in which 10 is maximum), the authentication processing is evaluated as a relatively heavy processing. Consequently, because of such relatively heavy load predicted to be borne by a responsible authenticating device, the load balancing apparatus 20 gives destination priority 10 to the authenticating device 1, which has the highest performance property and the lightest current load in the narrowed-down destination candidates, while the load balancing apparatus 20 gives destination priority 9 to the authenticating device 2. The load balancing apparatus 20 then designates the authenticating device 1 with the highest priority as the destination of the biometric authentication request.

Thus, according to the first embodiment, the load balancing apparatus evaluates a load arising from particular processing for biometric authentication, holds load evaluation, refers to the load evaluation, performance properties of authenticating devices and loads thereon, and then decides the destination of a biometric authentication request.

Moreover, the load balancing apparatus holds load evaluations set corresponding to matching level thresholds for determining pass or failure of a biometric authentication. Accordingly, the load balancing apparatus can take into account the matching level threshold that can affect the load on an authenticating device while performing biometric authentication. Therefore, the load balancing apparatus can distribute a biometric authentication request so as to efficiently balance loads on authenticating devices (servers) arising from the particular processing for biometric authentication.

The present invention is not limited to the first embodiment. The load balancing apparatus can also use a matching-data quality weight table that stores thereon weights set in accordance with the quality of matching biometric data.

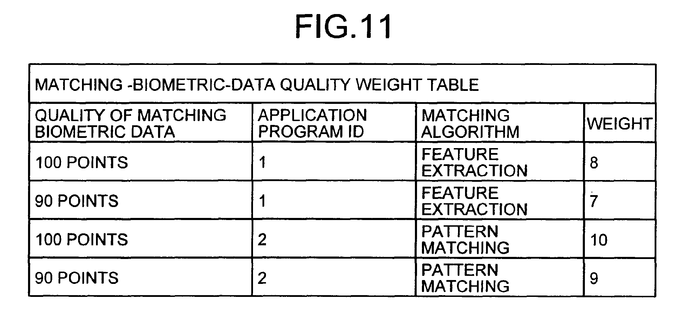

Fig. 11 is an example of a matching-data quality weight table according to a second embodiment of the present invention.

The matching-data quality weight table includes matching biometric-data quality (evaluated as a point score, where 100 points are full marks), application program ID, and weight, all of which are associated with each other. In the matching-data quality weight table, each weight value is set in accordance with a CPU occupancy rate determined from a trial authentication. For example, a developer of the load balancing apparatus performs a trial authentication with respect to each matching biometric-data quality so as to assign the larger value to the matching biometric-data quality requiring the longer matching time. When a matching biometric-data quality is 90 points, an application program ID is 1, and a matching algorithm is feature extraction, the weight is set at 7. The load balancing apparatus prestores therein the matching-data quality weight table including the weight.

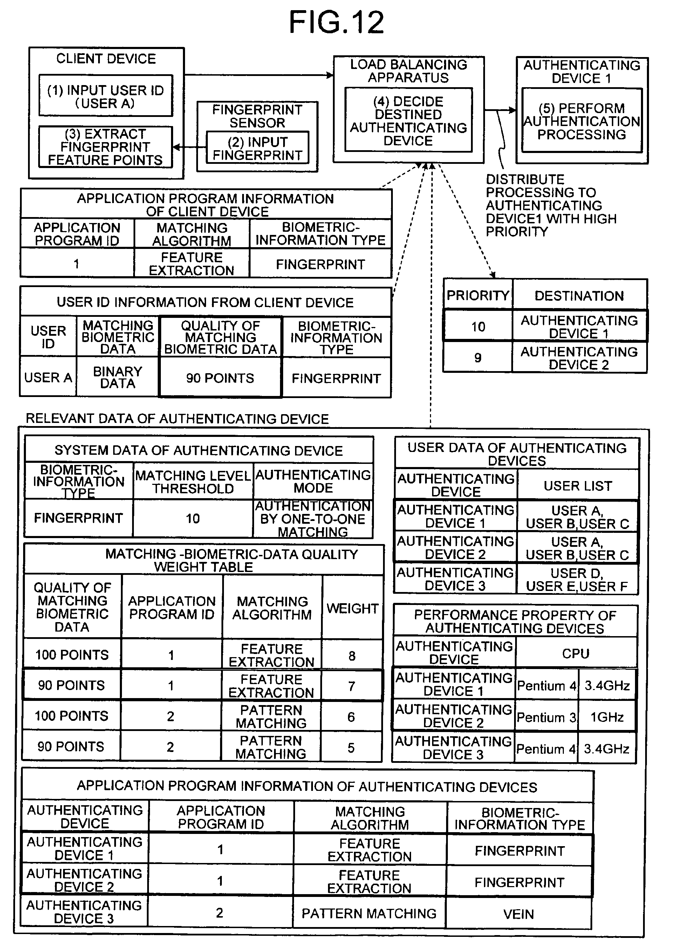

Fig. 12 is a schematic for explaining a destination deciding process according to the second embodiment.

When the load balancing apparatus receives a biometric authentication request from the client device via the network, together with user identification information including a user identification ID code (for example, USER A), matching biometric data, quality of the matching biometric data, and a biometric-information type (for example, fingerprint), the load balancing apparatus decides a destination of the biometric authentication request (for example, one of the authenticating devices 1 to 3).The quality of the matching biometric data included in the user identification information is automatically calculated by the client device based on the quantity of feature points extracted from a fingerprint. For example, if the quantity of feature points extracted from the fingerprint is nine, the quality of the matching biometric data is 90 points.

The destination deciding process according to the second embodiment is basically similar to that of the first embodiment. With respect to the user ID code, USER A, received from the client device, the load balancing apparatus narrows down authenticating devices of candidates for the destination of the biometric authentication request based on the application program information of the client device, and the user data and the application program information of the authenticating devices. In addition, a developer of the load balancing apparatus can predetermine at least one authenticating device as desired to which the load balancing apparatus can distribute a biometric authentication request, correspondingly to each weight in the matching-data quality weight table. For example, when the request has weight 7 or more, the request is distributed to the authenticating device 1 or 2.

As a result, the load balancing apparatus ranks narrowed-down authenticating devices of candidates for the destination based on the matching-level-threshold weight table, the performance properties, and the loads on the authenticating devices. For example, the load balancing apparatus ranks the authenticating devices into ten levels in which level 10 has the highest priority. The load balancing apparatus then designates an authenticating device with the highest priority as the destination. In this case, the load balancing apparatus ranks narrowed-down authenticating devices, namely, the authenticating device 1 and the authenticating device 2, in descending order of clock frequency of the CPU based on the performance property of each authenticating device. The load balancing apparatus then designates the authenticating device 1 with the highest priority as the destination of the biometric authentication request. The load balancing apparatus then requests the authenticating device 1 to perform biometric authentication in response to the biometric authentication request received from the client device.

According to the second embodiment, the load balancing apparatus can take into account the quality of the matching biometric data that can bring a load on an authenticating device while performing biometric authentication. Therefore, the load balancing apparatus can distribute a biometric authentication request so as to efficiently balance loads on authenticating devices arising from the particular processing for biometric authentication.

The present invention is not limited to the embodiments described above. The load balancing apparatus can also use a matching-data size weight table that stores thereon weights set in accordance with the size of matching biometric data.

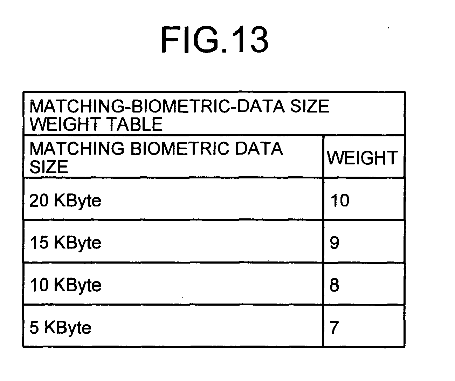

Fig. 13 is an example of a matching-data size weight table according to a third embodiment of the present invention.

The matching-data size weight table includes matching data size and weight, both of which are associated with each other. In the matching-data size weight table, each weight is set, for example, by a developer of the load balancing apparatus with respect to each matching biometric-data size (amount of biometric data to be matched). For example, when a matching biometric-data size is 20 KByte, the weight is set at 10. The load balancing apparatus prestores therein the matching-data size weight table including the weight.

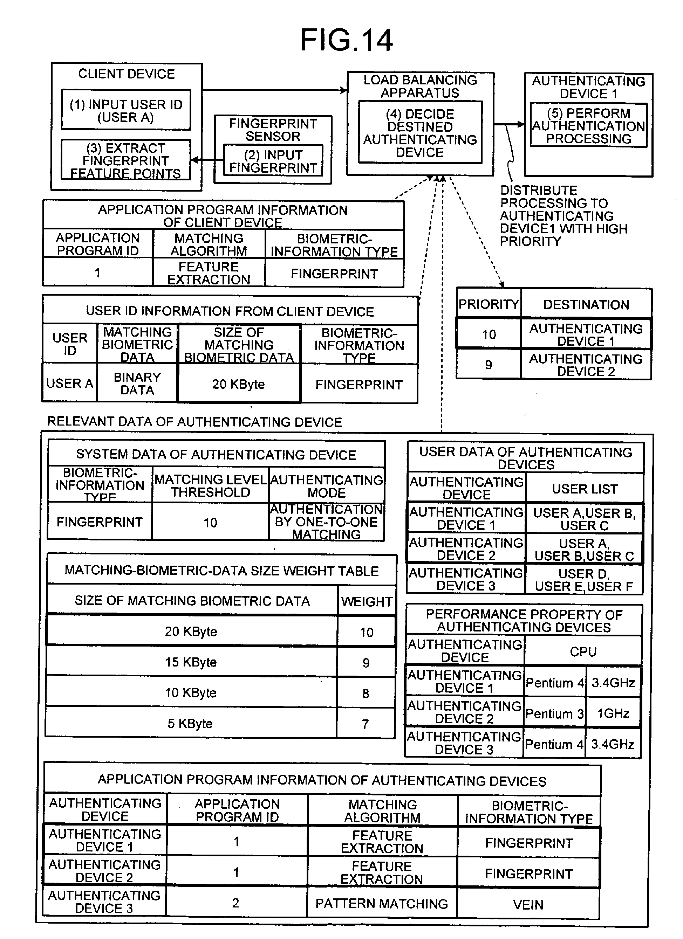

Fig. 14 is a schematic for explaining a destination deciding process according to the third embodiment.

When the load balancing apparatus receives a biometric authentication request from the client device via the network, together with user identification information including a user identification ID code (for example, USER A), matching biometric data, a size of the matching biometric data, and a biometric-information type (for example, fingerprint), the load balancing apparatus decides a destination of the biometric authentication request (for example, one of the authenticating devices 1 to 3).

The destination deciding process according to the third embodiment is basically similar to that of the above embodiments. With respect to the user ID code, USER A, received from the client device, the load balancing apparatus narrows down authenticating devices of candidates for the destination of the biometric authentication request based on the application program information of the client device, and the user data and the application program information of the authenticating devices. In addition, a developer of the load balancing apparatus can predetermine at least one authenticating device as desired to which the load balancing apparatus can distribute a biometric authentication request, correspondingly to each weight in the matching-data size weight table. For example, when the request has weight 10, the request is distributed to the authenticating device 1 or 2.

As a result, the load balancing apparatus ranks narrowed-down authenticating devices of candidates for the destination based on the matching-level-threshold weight table, the performance properties, and the loads on the authenticating devices. For example, the load balancing apparatus ranks the authenticating devices into ten levels in which level 10 has the highest priority. The load balancing apparatus then designates an authenticating device with the highest priority as the destination. In this case, the load balancing apparatus ranks narrowed-down authenticating devices, namely, the authenticating device 1 and the authenticating device 2, in descending order of clock frequency of the CPU based on the performance property of each authenticating device. The load balancing apparatus then designates the authenticating device 1 with the highest priority as the destination of the biometric authentication request. The load balancing apparatus then requests the authenticating device 1 to perform biometric authentication in response to the biometric authentication request received from the client device.

According to the second embodiment, the load balancing apparatus can take into account the size of the matching biometric data that can bring a load on an authenticating device while performing biometric authentication. Therefore, the load balancing apparatus can distribute a biometric authentication request so as to efficiently balance loads on authenticating devices arising from the particular processing for biometric authentication.

The present invention is not limited to the embodiments described above. The load balancing apparatus can also use a matching-algorithm weight table that stores thereon weights set in accordance with a matching algorithm (a matching method, such as feature extraction, and pattern matching).

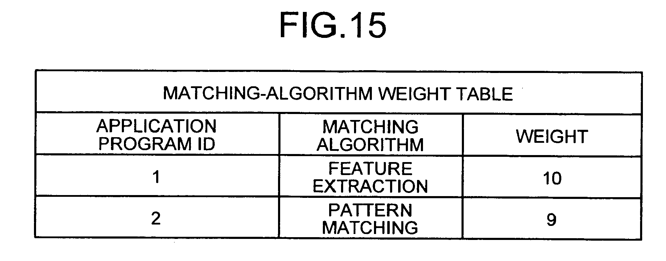

Fig. 15 is an example of a matching-algorithm weight table according to a fourth embodiment of the present invention.

The matching-algorithm weight table includes application program ID, matching algorithm, and weight, all of which are associated with each other. In the matching-algorithm weight table, each value of the weight is set, for example, by a developer of the load balancing apparatus with respect to each matching algorithm varying between application program types so as to assign the larger value to the matching algorithm requiring the higher CPU occupancy rate. When a matching algorithm is feature extraction, the weight is set at 10. The load balancing apparatus prestores therein the matching-algorithm weight table including the weight.

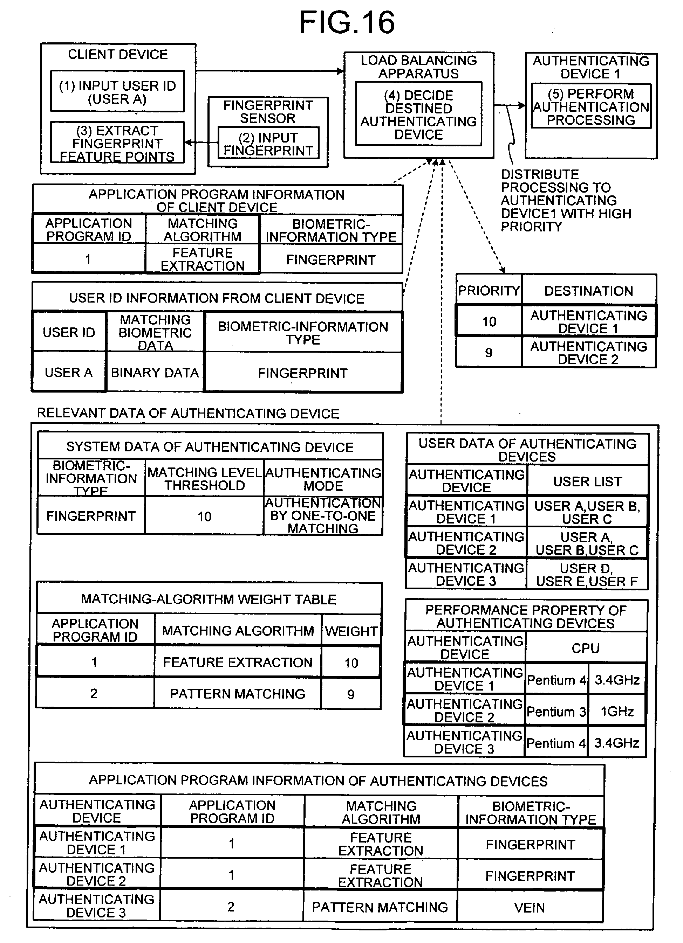

Fig. 16 is a schematic for explaining a destination deciding process according to the fourth embodiment.

When the load balancing apparatus receives a biometric authentication request from the client device via the network, together with user identification information including a user identification ID code (for example, USER A), matching biometric data, and a biometric-information type (for example, fingerprint), the load balancing apparatus decides a destination of the biometric authentication request (for example, one of the authenticating devices 1 to 3).

The destination deciding process according to the fourth embodiment is basically similar to that of the above embodiments. With respect to the user ID code, USER A, received from the client device, the load balancing apparatus searches for a matching algorithm for the user A from the application program information of the client device. The load balancing apparatus also narrows down authenticating devices of candidates for the destination of the biometric authentication request based on the user data and the application program information of the authenticating devices. In addition, a developer of the load balancing apparatus can predetermine at least one authenticating device as desired to which the load balancing apparatus can distribute a biometric authentication request, correspondingly to each weight corresponding to searched matching algorithm in the matching-algorithm weight table. For example, when the request has weight 10, the request is distributed to the authenticating device 1 or 2.

As a result, the load balancing apparatus ranks narrowed-down authenticating devices of candidates for the destination based on the matching-algorithm weight table, the performance properties, and the loads on the authenticating devices. For example, the load balancing apparatus ranks the authenticating devices into ten levels in which level 10 has the highest priority. The load balancing apparatus then designates an authenticating device with the highest priority as the destination. In this case, the load balancing apparatus ranks narrowed-down authenticating devices, namely, the authenticating device 1 and the authenticating device 2, in descending order of clock frequency of the CPU based on the performance property of each authenticating device. The load balancing apparatus then designates the authenticating device 1 with the highest priority as the destination of the biometric authentication request. The load balancing apparatus then requests the authenticating device 1 to perform biometric authentication in response to the biometric authentication request received from the client device.

According to the fourth embodiment, the load balancing apparatus can take into account the amount of biometric data to be matched, which affects the load on an authenticating device while performing biometric authentication. Therefore, the load balancing apparatus can distribute a biometric authentication request so as to efficiently balance loads on authenticating devices arising from the particular processing for biometric authentication.

The present invention is not limited to the embodiments described above. The load balancing apparatus can also use an authenticating-mode weight table that stores thereon weights set in accordance with an authenticating mode (an authentication method by one-to-one matching, or one-to-n matching).

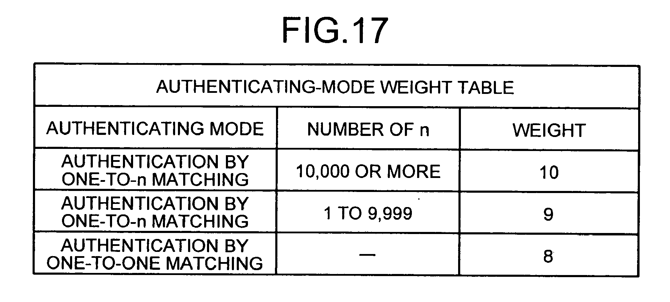

Fig. 17 is an example of an authenticating-mode weight table according to a fifth embodiment of the present invention.

The authenticating-mode weight table includes authenticating mode, the number of n for one-to-n matching, and weight, all of which are associated with each other. In the authenticating-mode weight table, each value of the weight is set in accordance with a CPU occupancy rate determined from a trial authentication. For example, a developer of the load balancing apparatus performs the trial authentication with respect to each number of n for authentication by one-to-n matching. When n for authentication by one-to-n matching is 10,000 or more, the weight is set at 10, while an authentication is by one-to-one matching, the weight is set at 8. The load balancing apparatus prestores therein the authenticating-mode weight table including the weight.

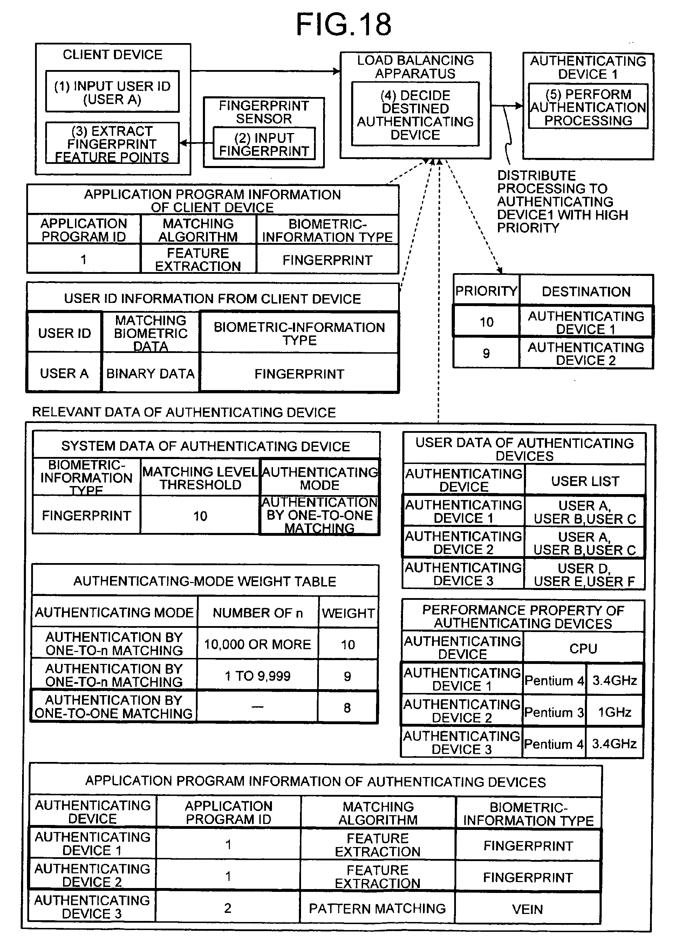

Fig. 18 is a schematic for explaining a destination deciding process according to the fifth embodiment.

When the load balancing apparatus receives a biometric authentication request from the client device via the network, together with user identification information including a user identification ID code (for example, USER A), matching biometric data, and a biometric-information type (for example, fingerprint), the load balancing apparatus decides a destination of the biometric authentication request (for example, one of the authenticating devices 1 to 3).

The destination deciding process according to the fifth embodiment is basically similar to that of the above embodiments. With respect to the user ID code, USER A, received from the client device, the load balancing apparatus narrows down authenticating devices of candidates for the destination of the biometric authentication request based on the application program information of the client device and the user data and the application program information of the authenticating devices, and searches the authenticating mode from the system date of narrowed-down authenticating devices. In addition, a developer of the load balancing apparatus can predetermine at least one authenticating device as desired to which the load balancing apparatus can distribute a biometric authentication request, correspondingly to each weight corresponding to searched authenticating mode in the authenticating-mode weight table. For example, when the request has weight 10, the request is distributed to the authenticating device 1 or 2.

As a result, the load balancing apparatus ranks narrowed-down authenticating devices of candidates for the destination based on the authenticating-mode weight table, the performance properties, and the loads on the authenticating devices. For example, the load balancing apparatus ranks the authenticating devices into ten levels in which level 10 has the highest priority. The load balancing apparatus then designates an authenticating device with the highest priority as the destination. In this case, the load balancing apparatus ranks narrowed-down authenticating devices, namely, the authenticating device 1 and the authenticating device 2, in descending order of clock frequency of the CPU based on the performance property of each authenticating device. The load balancing apparatus then designates the authenticating device 1 with the highest priority as the destination of the biometric authentication request. The load balancing apparatus then requests the authenticating device 1 to perform biometric authentication in response to the biometric authentication request received from the client device.

According to the fifth embodiment, the load balancing apparatus can take into account the authenticating mode that can affect the load on an authenticating device (server) while performing biometric authentication. Therefore, the load balancing apparatus can distribute a biometric authentication request so as to efficiently balance loads on authenticating devices arising from the particular processing for biometric authentication.

The present invention is not limited to the embodiments described above. The load balancing apparatus can also use a biometric-information weight table that stores thereon weights set in accordance with a biometric information type and a biometric-information attribution of matching biometric data.

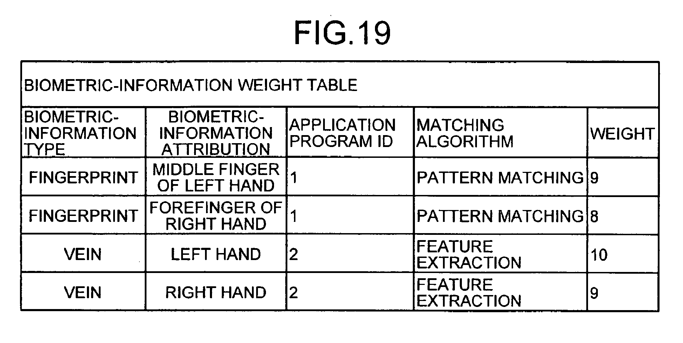

Fig. 19 is an example of a biometric-information weight table according to a sixth embodiment of the present invention.

The biometric-information weight table includes biometric-information type, biometric-information attribution (for example, middle finger of left hand, or right hand), application program ID, matching algorithm, and weight all of which are associated with each other. In the biometric-information weight table, each weight is set in accordance with a CPU occupancy rate determined from a trial authentication. For example, a developer of the load balancing apparatus performs the trial authentication with respect to each combination of biometric information and biometric-information attribution. For example, when a combination includes the middle finger of the left hand, an application program ID 1, and the pattern matching as the matching algorithm, the weight is set at 9. The load balancing apparatus prestores therein the biometric-information weight table including the weight.

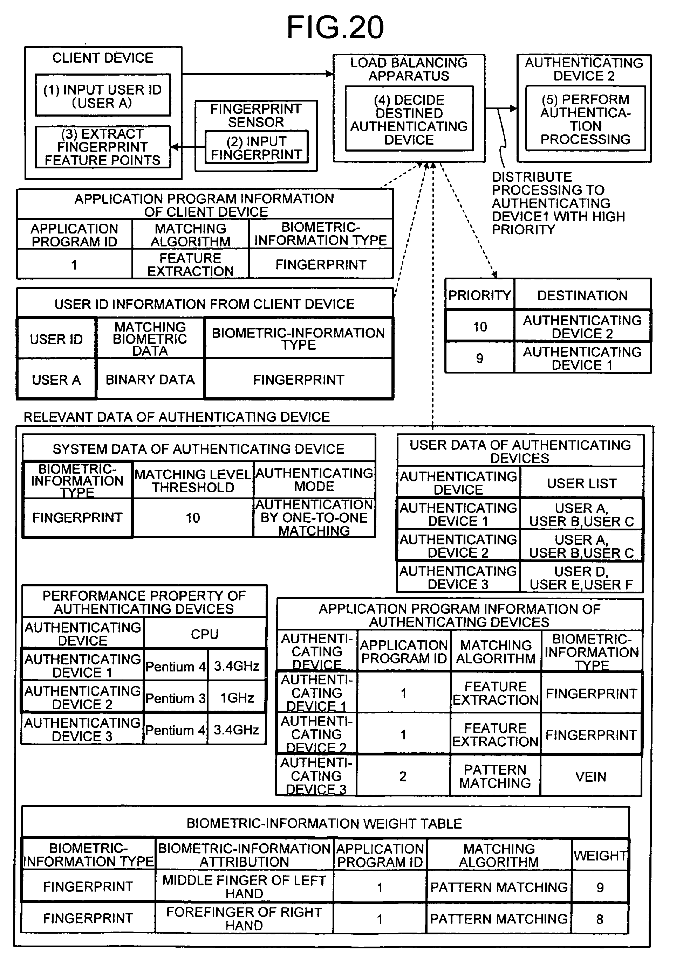

Fig. 20 is a schematic for explaining a destination deciding process according to the sixth embodiment.

When the load balancing apparatus receives a biometric authentication request from the client device via the network, together with user identification information including a user identification ID code (for example, USER A), matching biometric data, and a biometric-information type (for example, fingerprint), the load balancing apparatus decides a destination of the biometric authentication request (for example, one of the authenticating devices 1 to 3).Although not shown in the drawings, the user identification information includes biometric-information attribution.

The destination deciding process according to the sixth embodiment is basically similar to that of the above embodiments. With respect to the user ID code, USER A, received from the client device, the load balancing apparatus narrows down authenticating devices of candidates for the destination of the storing request of the registration biometric data based on the application program information of the client device, and the user data and the application program information of the authenticating devices. In addition, a developer of the load balancing apparatus can predetermine at least one authenticating device as desired to which the load balancing apparatus can distribute a biometric authentication request, correspondingly to each weight corresponding to each set of biometric information type and biometric-information attribution in the biometric-information weight table. For example, when the request has weight 10, the request is distributed to the authenticating device 1 or 2.

As a result, the load balancing apparatus ranks narrowed-down authenticating devices of candidates for the destination based on the biometric-information weight table, the performance properties, and the loads on the authenticating devices. For example, the load balancing apparatus ranks the authenticating devices into ten levels in which level 10 has the highest priority. The load balancing apparatus then designates an authenticating device with the highest priority as the destination. In this case, the load balancing apparatus ranks narrowed-down authenticating devices, namely, the authenticating device 1 and the authenticating device 2, in descending order of clock frequency of the CPU based on the performance property of each authenticating device. The load balancing apparatus then designates the authenticating device 1 with the highest priority as the destination of the biometric authentication request. The load balancing apparatus then requests the authenticating device 1 to perform biometric authentication in response to the biometric authentication request received from the client device.

According to the sixth embodiment, the load balancing apparatus can take into account the quality of the reference data, which is another factor affecting the load on an authenticating device (server) while performing biometric authentication. Therefore, the load balancing apparatus can distribute a biometric authentication request so as to efficiently balance loads on authenticating devices arising from the particular processing for biometric authentication.

If an application program installed in the authenticating device 1 and the authenticating device 2 and an application program installed on the authenticating device 3, where the authenticating device 1, the authenticating device 2, and the authenticating device 3 are under command of the load balancing apparatus, for example in first embodiment; the load balancing apparatus can set common matching level thresholds instead of different matching level thresholds between different application types.

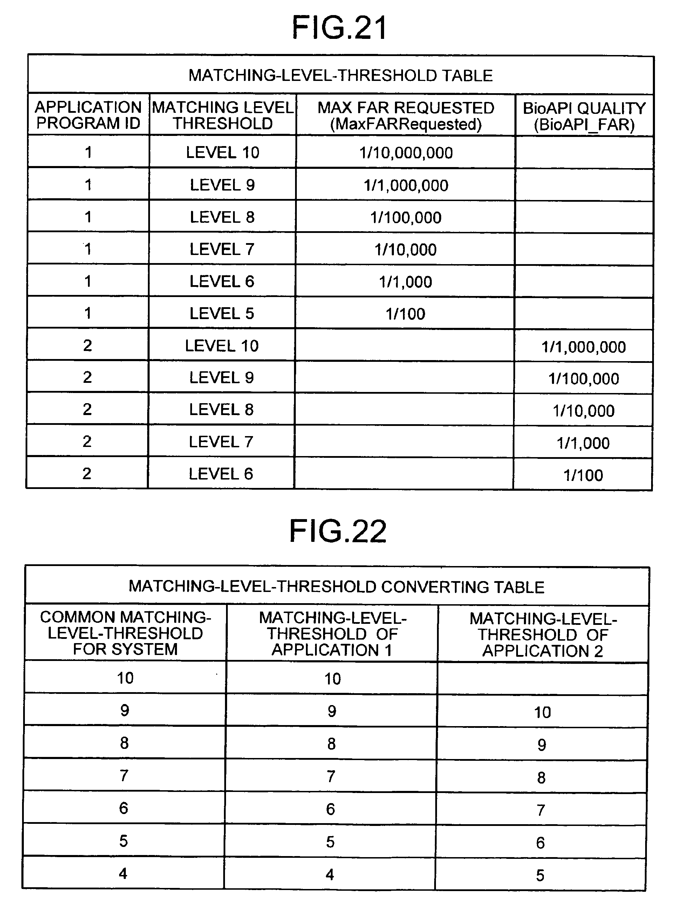

Fig. 21 is an example of a matching-level-threshold weight table, and Fig. 22 is an example of a matching-level-threshold converting table, according to a seventh embodiment of the present invention.

Suppose an application program with the application program ID 1 is installed in the authenticating device 1 and the authenticating device 2, while an application program with an application program ID 2 is installed in the authenticating device 3, as shown in Fig. 8. The load balancing apparatus prestores therein matching level thresholds set in accordance with the maximum value of a false acceptance rate (FAR) (Max FAR Requested) by associating with the application program ID 1, and matching level thresholds set in accordance with the quality of a biometric application program interface (BioAPI_FAR) by associating with the application program ID 2, as shown in Fig. 21.

The load balancing apparatus, for example, converts the matching level thresholds of the application program ID 2 to the matching level thresholds of the application program ID 1 to provide compatibility of the matching level thresholds between two application programs. In Figs. 21, when the maximum value of the false acceptance rate is a millionth (one in a million times), the matching level threshold of the application program ID 1 is 9, while the quality of BioAPI is a millionth, the matching level threshold of the application program ID 2 is 10. A common matching level threshold corresponding to above two thresholds is 9, which is obtained by converting the matching level threshold of the application program ID 2 to the matching level threshold of the application program ID 1 based on the matching-level-threshold converting table in Fig. 22. Thus, when types of installed application programs are different between the authenticating devices, for example, the load balancing apparatus decides the destination of the biometric authentication request by using the common matching level thresholds.

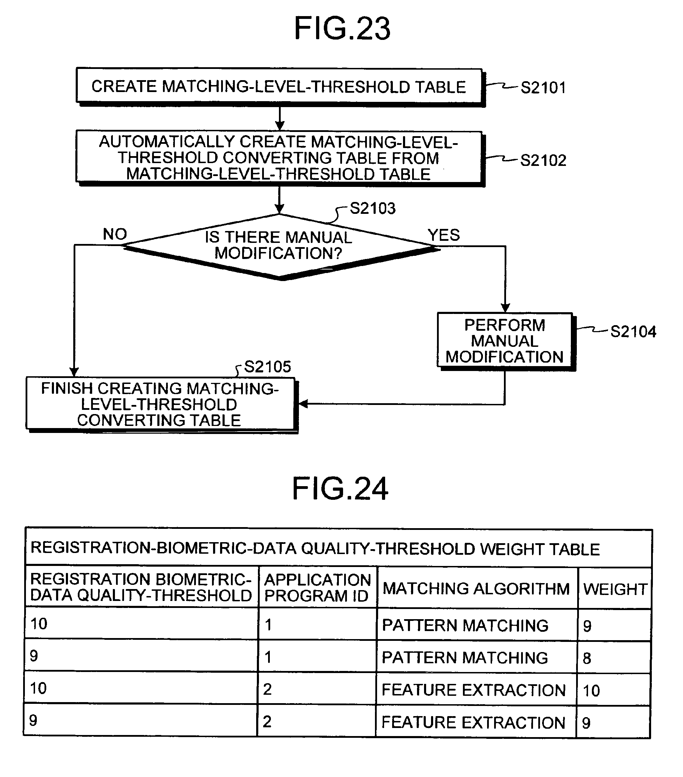

Fig. 23 is a flowchart of creation of the matching-level-threshold converting table shown in Fig. 22.

The load balancing apparatus automatically creates the matching-level-threshold table (see Fig. 21) based on prestored system data of the authenticating devices (step S2101). Subsequently, the load balancing apparatus automatically creates the matching-level-threshold converting table (see Fig. 22) from the matching-level-threshold table (step S2102). If an operator, such as a developer of the load balancing apparatus, manually modifies the matching-level-threshold converting table (Yes at step S2103), after a manual modification performed (step S2104), the load balancing apparatus completes creation of the matching-level-threshold converting table (step S2105). In contrast, if there is not modification on the matching-level-threshold converting table (No at step S2103), the load balancing apparatus directly completes creation of the matching-level-threshold converting table (step S2105).

According to the seventh embodiment, the load balancing apparatus can manage different matching level thresholds that vary between application program types installed on respective devices, and that can bring a load on the authenticating device while performing biometric authentication. Therefore, the load balancing apparatus can distribute a biometric authentication request so as to efficiently balance loads on authenticating devices arising from the particular processing for biometric authentication.

The present invention is not limited to the first embodiment to the sixth embodiment. When the load balancing apparatus receives a request for storing registration biometric data from the client device, the load balancing apparatus can also decide the destination of the storing request of the registration biometric data.

Fig. 24 is an example of a registration biometric-data quality-threshold weight table according to an eighth embodiment of the present invention.

The registration biometric-data quality-threshold weight table includes quality threshold of registration biometric data, application program ID, matching algorithm, and weight, all stored in correspondence with each other. The registration biometric data is, for example, reference data for checking with the matching data received from the client device, such as a template used for pattern matching. In the registration biometric-data quality-threshold weight table, each value of the weight is set in accordance with a CPU occupancy rate determined from a trial authentication. For example, a developer of the load balancing apparatus performs a trial authentication with respect to each registration biometric-data quality-threshold, each application program ID, and each matching algorithm. For example, when an application program ID is 2, and a matching algorithm is feature extraction, the weight is set at 10. The load balancing apparatus prestores therein the registration biometric-data quality-threshold weight table including the weight.

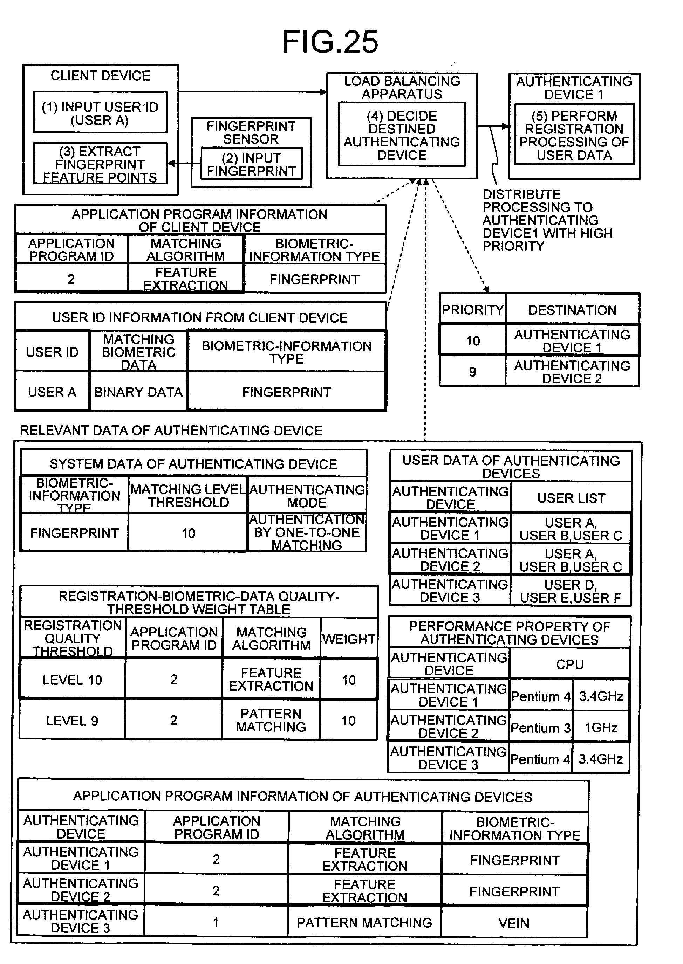

Fig. 25 is a schematic for explaining a destination deciding process according to the eighth embodiment.

When the load balancing apparatus receives a request for storing registration biometric data from the client device via the network, together with user identification information including a user identification ID code (for example, USER A), registration biometric data, and a biometric-information type (for example, fingerprint), the load balancing apparatus decides a destination of the request for storing the registration biometric data (for example, one of the authenticating devices 1 to 3).

Specifically, with respect to the user ID code, USER A, received from the client device, the load balancing apparatus narrows down authenticating devices of candidates for the destination of the storing request of the registration biometric data based on the application program information of the client device, and the user data and the application program information of the authenticating devices, and searches a quality threshold for the registration storing data from the system data of the narrowed-down authenticating devices. In addition, a developer of the load balancing apparatus can predetermine at least one authenticating device as desired to which the load balancing apparatus can distribute the storing request of the registration biometric data correspondingly to each weight corresponding to searched quality threshold of the registration biometric data in the registration biometric-data quality-threshold weight table. For example, when the request has weight 10, the request is distributed to the authenticating device 1 or 2.

As a result, the load balancing apparatus ranks narrowed-down authenticating devices of candidates for the destination based on the registration biometric-data quality-threshold weight table, the performance properties, and the loads on the authenticating devices. For example, the load balancing apparatus ranks the authenticating devices into ten levels in which level 10 has the highest priority. The load balancing apparatus then designates an authenticating device with the highest priority as the destination. In this case, the load balancing apparatus ranks narrowed-down authenticating devices, namely, the authenticating device 1 and the authenticating device 2, in descending order of clock frequency of the CPU based on the performance property of each authenticating device. The load balancing apparatus then designates the authenticating device 1 with the highest priority as the destination of the biometric authentication request. The load balancing apparatus then requests the authenticating device 1 designated as the destination to store therein the registration biometric data received from the client device.

According to the eighth embodiment, the load balancing apparatus can take into account the quality threshold of the reference data that affect the load on an authenticating device while performing biometric authentication. For example, an authenticating device with a high performance can prestore therein reference data which will predictably cause a high CPU occupancy rate of the authenticating device while performing biometric authentication. As a result, the load balancing apparatus can efficiently balance loads on authenticating devices arising from the particular processing for biometric authentication.

The present invention is not limited to the eighth embodiment. The load balancing apparatus can also use a registration biometric-data quality weight table that stores thereon weights set in accordance with the quality of registration biometric data.

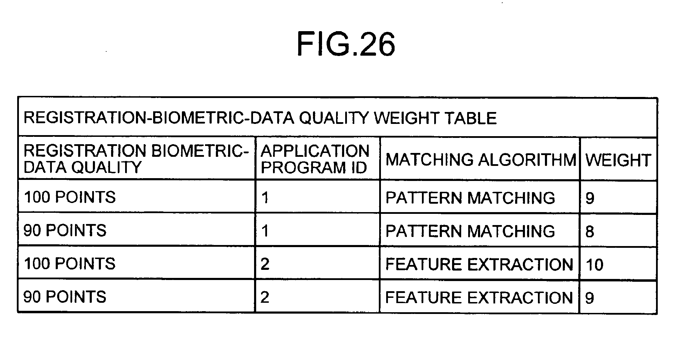

Fig. 26 is an example of a registration biometric-data quality weight table according to a ninth embodiment of the present invention.

The registration biometric-data quality weight table includes quality of registration biometric-data, application program ID, matching algorithm, and weight in association with each other. In the registration biometric-data quality weight table, each weight is set in accordance with a CPU occupancy rate determined from a trial authentication. For example, a developer of the load balancing apparatus performs the trial authentication with respect to each registration biometric-data quality-point-level, each application program ID, and each matching algorithm. For example, when an application program ID is 2, and a matching algorithm is feature extraction, the weight is set at 10. The load balancing apparatus prestores therein the registration biometric-data quality weight table including the weight.

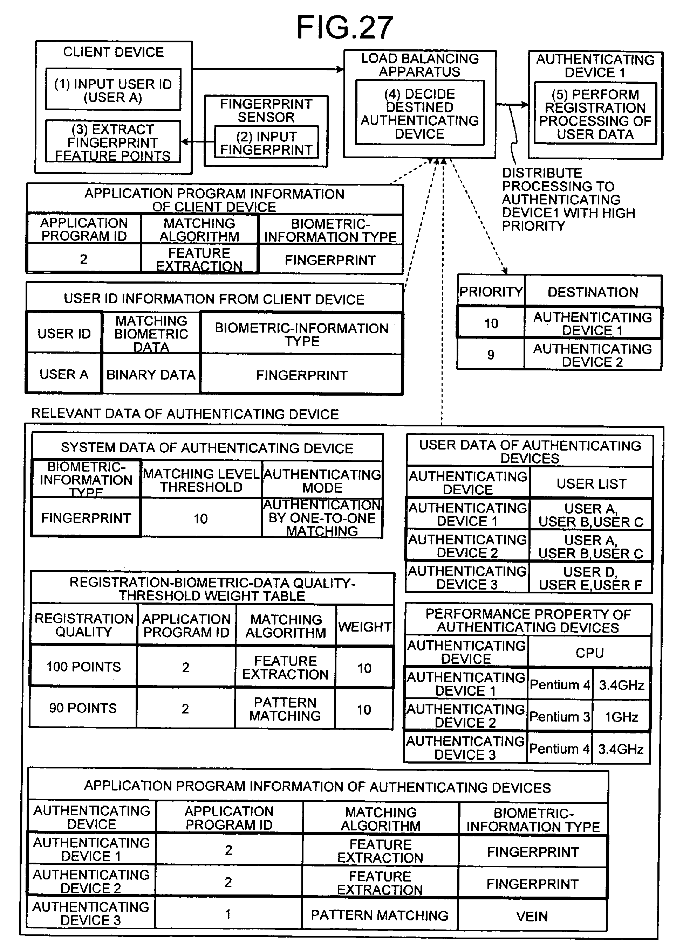

Fig. 27 is a schematic for explaining a destination deciding process according to the ninth embodiment.

When the load balancing apparatus receives a request for storing registration biometric data from the client device via the network, together with user identification information including a user identification ID code (for example, USER A), registration biometric data, a biometric-information type (for example, fingerprint), and quality of the registration biometric data (not shown) the load balancing apparatus decides a destination of the request for storing the registration biometric data (for example, one of the authenticating devices 1 to 3).

Specifically, with respect to the user ID code, USER A, received from the client device, the load balancing apparatus narrows down authenticating devices of candidates for the destination of the storing request of the registration biometric data based on the application program information of the client device, and the user data and the application program information of the authenticating devices. In addition, a developer of the load balancing apparatus can predetermine at least one authenticating device as desired to which the load balancing apparatus can distribute the storing request of the registration biometric data correspondingly to each weight corresponding to the quality of registration biometric data in the registration biometric-data quality weight table. For example, when the request has weight 10, the request is distributed to the authenticating device 1 or 2.

As a result, the load balancing apparatus ranks narrowed-down authenticating devices of candidates for the destination based on the registration biometric-data quality weight table, the performance properties, and the loads on the authenticating devices. For example, the load balancing apparatus ranks the authenticating devices into ten levels in which level 10 has the highest priority. The load balancing apparatus then designates an authenticating device with the highest priority as the destination. In this case, the load balancing apparatus ranks narrowed-down authenticating devices, namely, the authenticating device 1 and the authenticating device 2, in descending order of clock frequency of the CPU based on the performance property of each authenticating device. The load balancing apparatus then designates the authenticating device 1 with the highest priority as the destination of the biometric authentication request. The load balancing apparatus then requests the authenticating device 1 designated as the destination to store therein the registration biometric data received from the client device.

According to the ninth embodiment, by taking into account the quality of the reference data, which is a factor affecting the load involved in biometric authentication, an authenticating device with a high performance can prestore therein reference data predicted to cause a high CPU occupancy rate of an authenticating device while performing biometric authentication. As a result, the load balancing apparatus can efficiently balance loads on authenticating devices arising from the particular processing for biometric authentication.

The present invention can be realized in different modifications other than the embodiments described above.

A standby replacement device can be provided in advance to take over the function of the load balancing apparatus 20 in case of a malfunction in the load balancing apparatus 20 in the first embodiment.

Each unit of the load balancing apparatus 20 shown in Fig. 2 is functional and conceptual. Therefore, the units in the load balancing apparatus 20 do not need to be mechanically configured as shown in Fig. 2. In other words, a concrete form of separation or integration of the units in the load balancing apparatus 20 is not limited to that shown in the drawings. For example, the whole or part of the authentication-request transmitting unit 23a, the load-evaluation creating unit 23b, and the destination deciding unit 23c can be separated or integrated functionally or physically into desired portion or aggregation in accordance with various loads and operating situations. Moreover, the CPU can implement the whole or any desired part of each process performed by the load balancing apparatus 20, namely, holding the load evaluation and deciding destination, by reading out a preinstalled computer program onto a memory and executing the program to boot relevant processes.

Moreover, the load balancing apparatus 20 can manually perform the whole or part of creation of the matching-level-threshold weight table and the creation of the matching-level-threshold converting table, both of which are explained to be performed automatically as shown in Fig. 23. In turn, the load balancing apparatus 20 can also automatically perform, by a known method, the whole or part of modification of the matching-level-threshold converting table, which is explained to be performed manually as shown in Fig. 23. Furthermore, information written in the above description or shown in the drawings including processing procedures, control procedures, specific names, data, and parameters, can be changed as desired, unless otherwise specified.

According to the embodiments, because the load balancing apparatus holds load evaluations set corresponding to the biometric information type (for example, fingerprint, or vein) and the biometric information attribution (for example, right hand, or left hand), the load balancing apparatus can take into account the biometric information type and the biometric information attribution both of which affect the load on a server while performing biometric authentication. Therefore, the load balancing apparatus can distribute a biometric authentication request so as to efficiently balance loads on authenticating devices arising from the particular processing for biometric authentication.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A load balancing apparatus that distributes a biometric authentication request output from a client device to one of authenticating devices that perform biometric authentication in accordance with performance property of each authenticating device and a load thereon that changes depending on a processing situation, the load balancing apparatus comprising:
a storage unit that stores therein information on load evaluation indicative of load arising from particular processing in the biometric authentication; and
a destination deciding unit that decides a destination of the biometric authentication request based on the information on load evaluation present in the storage unit, the performance property, and the load.

2. The load balancing apparatus according to claim 1, wherein the information on load evaluation includes a matching level threshold used for determining pass or failure of the biometric authentication.

3. The load balancing apparatus according to claim 1 or 2, wherein the information on load evaluation includes a quality of matching data received from the client device along with the biometric authentication request.

4. The load balancing apparatus according to claim 1, 2, or 3, wherein the information on load evaluation includes a size of matching data received from the client device along with the biometric authentication request.

5. The load balancing apparatus according to claim 1, 2, 3, or 4, wherein the information on load evaluation includes a matching algorithm for matching data received from the client device along with the biometric authentication request.

6. The load balancing apparatus according to any preceding claim, wherein the information on load evaluation includes an authenticating mode for the biometric authentication.

7. The load balancing apparatus according to any preceding claim, wherein the information on load evaluation includes a biometric-information type and a biometric information attribution of matching data received from the client device along with the biometric authentication request.

8. The load balancing apparatus according to claim 2, further comprising a setting unit that sets a common matching level threshold in order to maintain compatibility between different application programs, if a matching level threshold of the client device and a matching level threshold of the authenticating device are different because different application programs are installed on the client device and the authenticating device, wherein
the information on load evaluation includes the common matching level threshold.

9. The load balancing apparatus according to claim 1, wherein, when receiving a storing request for reference data that is used for authenticating matching data received from the client device along with the biometric authentication request,
the information on load evaluation includes a quality of the reference data, and
the destination deciding unit decides a destination of the storing request based on the information on load evaluation, the performance property, and the load.

10. The load balancing apparatus according to claim 9, wherein the information on load evaluation includes a threshold of the quality of the reference data.

11. A method of balancing load by distributing a biometric authentication request output from a client device to one of authenticating devices that perform biometric authentication in accordance with performance property of each authenticating device and a load thereon that changes depending on a processing situation, the method comprising:
storing information on load evaluation indicative of load arising from particular processing in the biometric authentication in a storage unit; and
deciding a destination of the biometric authentication request based on the information on load evaluation present in the storage unit, the performance property, and the load.

12. The method according to claim 11, wherein the information on load evaluation includes a matching level threshold used for determining pass or failure of the biometric authentication.

13. The method according to claim 11 or 12, wherein the information on load evaluation includes a quality of matching data received from the client device along with the biometric authentication request.

14. The method according to claim 11, 12, or 13, wherein the information on load evaluation includes a size of matching data received from the client device along with the biometric authentication request.

15. The method according to any of claims 11-14, wherein the information on load evaluation includes a matching algorithm for matching data received from the client device along with the biometric authentication request.

16. The method according to any of claims 11-15, wherein the information on load evaluation includes an authenticating mode for the biometric authentication.

17. The method according to any of claims 11-16, wherein the information on load evaluation includes a biometric-information type and a biometric information attribution of matching data received from the client device along with the biometric authentication request.

18. The method according to claim 12, further comprising setting a common matching level threshold in order to maintain compatibility between different application programs, if a matching level threshold of the client device and a matching level threshold of the authenticating device are different because different application programs are installed on the client device and the authenticating device, wherein
the information on load evaluation includes the common matching level threshold.

19. The method according to claim 11, wherein, when receiving a storing request for reference data that is used for authenticating matching data received from the client device along with the biometric authentication request,
the information on load evaluation includes a quality of the reference data, and
deciding includes deciding a destination of the storing request based on the information on load evaluation, the performance property, and the load.

20. The method according to claim 19, wherein the information on load evaluation includes a threshold of the quality of the reference data.
